# EUROPÄISCHE PATENTSCHRIFT

(11) **EP 3 465 898 B1**
(45) Veröffentlichungstag und Bekanntmachung des Hinweises auf die Patenterteilung: **27.04.2022**
(21) Anmeldenummer: 17755433.4
(22) Anmeldetag: 03.08.2017
(51) Int. Cl.: H02P 1/22, H02P 1/28, H02P 3/18, H02M 5/293

(54) **SANFTSTARTER, BETRIEBSVERFAHREN UND SCHALTSYSTEM**
SOFT STARTER, OPERATING METHOD, AND SWITCHING SYSTEM
DÉMARREUR PROGRESSIF, PROCÉDÉ DE FONCTIONNEMENT ET SYSTÈME DE COMMUTATION

(30) Priorität: 04.08.2016 DE 102016214419
(43) Veröffentlichungstag der Anmeldung: 10.04.2019
(73) Patentinhaber: Siemens Aktiengesellschaft, 80333 München (DE)
(72) Erfinder: LEE-HOFF, Kyoung-Jin, 92224 Amberg (DE); SEITZ, Johann, 92224 Amberg (DE); AUFSCHNEIDER, Klaus, 92278 Illschwang (DE); HERTZ, Dirk, 92260 Fichtenhof (DE); MEIER, Markus, 92286 Rieden (DE); ZITZLER, Stefan, 92421 Schwandorf (DE)
(86) Internationale Anmeldenummer: PCT/EP2017/069678
(87) Internationale Veröffentlichungsnummer: WO 2018/024832

(56) Entgegenhaltungen:
- DE-A1- 10 200 091
- DE-B3-102008 062 851
- US-A- 4 996 469
- US-A1- 2015 171 625

## Beschreibung

Die Erfindung betrifft einen Sanftstarter und ein zugehöriges Betriebsverfahren zum Betreiben eines Elektromotors. Die Erfindung betrifft auch eine Firmware, die dazu ausgebildet ist, das erfindungsgemäße Betriebsverfahren in einem geeigneten Sanftstarter umzusetzen. Die Erfindung betrifft ferner ein Schaltsystem, das auf einem entsprechenden Sanftstarter basiert.

Das Handbuch "Sanftstarter 3RW44 - Gerätehandbuch Ausgabe 10/2010" mit der Bestellbezeichnung GWA 4NEB 535 2195-01 DS 06 der Siemens AG offenbart einen Sanftstarter zum Betrieb eines Elektromotors. Der Sanftstarter weist in jeder Hauptstrombahn eine Bypass-Schaltung aus einem elektromechanischen Schalter und einem parallelen Halbleiterschalter auf, die über eine Steuereinheit betätigbar sind. Derartige Sanftstarter sind mit Schützen kombinierbar, um so einen sicheren Betrieb des Elektromotors zu gewährleisten. Eine Kombination des Sanftstarters mit einem Schütz bildet ein Schaltsystem und ist geeignet, ein Sicherheitsintegritätslevel SIL2 bereitzustellen. In einer Kombination des Sanftstarters mit zwei Schützen wird das Sicherheitsintegritätslevel SIL3 erreicht.

In der Automatisierungstechnik besteht Bedarf an Schaltsystemen, die ein hohes Maß an Sicherheit und Kompaktheit bieten. Ferner wird eine reduzierte Komponenten- und Bauteilanzahl angestrebt, um so ein hohes Maß an Wirtschaftlichkeit zu gewährleisten. Der Erfindung liegt die Aufgabe zugrunde, einen Sanftstarter und ein entsprechendes Schaltsystem bereitzustellen, die die bekannten Sanftstarter und Schaltsysteme in den oben dargestellten Aspekten verbessern.

Die Aufgabenstellung wird durch einen Sanftstarter gemäß Anspruch 1 gelöst und der an mindestens einer Hauptstrombahn angeschlossen ist, über die ein Elektromotor mit Strom versorgt wird. Der Sanftstarter ist dazu ausgebildet, die Stromversorgung zu unterbrechen und zu schließen, um so einen bestimmungsgemäßen Betrieb des Elektromotors zu erlauben. In der oder den Hauptstrombahnen ist jeweils eine Bypass-Schaltung angeordnet, die einen Halbleiterschalter umfasst. Parallel zum Halbleiterschalter ist ein elektromagnetischer Schalter, beispielsweise ein Relais, angebracht, das im geschlossenen Zustand einen nahezu verschleißfreien Dauerbetrieb des Elektromotors erlaubt. Der Halbleiterschalter ist beispielsweise als antiparallel angeordnete Thyristoren ausgebildet, die dazu geeignet sind, ein lichtbogenfreies Schalten zu ermöglichen und eine Phasenanschnittsteuerung oder Phasenabschnittsteuerung zu verwirklichen. Über die Phasenanschnittsteuerung oder die Phasenabschnittsteuerung kann beispielsweise eine kontrollierte Auslauffunktion des Elektromotors bereitgestellt werden. Zum Betrieb der mindestens einen Bypass-Schaltung ist der Sanftstarter mit einer Steuereinheit versehen, die dazu ausgebildet ist, Betätigungsbefehle und/oder Zündbefehle an den elektromechanischen Schalter und den Halbleiterschalter auszugeben. Darüber hinaus ist die Steuereinheit mit einem Steuersignaleingang ausgestattet, über den ein Betriebssteuersignal empfangbar ist. Ein Betriebssteuersignal ist dabei ein Steuersignal, das von einem Benutzer oder einer übergeordneten Steuerinstanz, beispielsweise einer speicherprogrammierbaren Steuerung (= SPS), erzeugt wird, um einen gewünschten Betrieb des Elektromotors einzuleiten oder durchzuführen. Erfindungsgemäß weist die Steuereinheit auch einen separaten Sicherheitssignaleingang auf, über den Sicherheitssignale empfangbar sind. Die Sicherheitssignale können dabei von einer sicherheitsgerichteten Schaltung bzw. Steuerung stammen, beispielsweise von einem sicherheitsgerichteten Meldegerät wie einem Not-Aus- oder Not-Halt-Schalter, einem Positionsschalter, einer Schutztür, einer Lichtschranke, einem Lichtgitter oder einem Lichtvorhang.

Sicherheitsgerichtet ist ein System dann, wenn es bei Auftreten eines Ausfalls, d.h. einer Beendigung der Fähigkeit des Systems, eine geforderte Funktion zu erfüllen, in einen definierten sicheren Systemzustand übergeht. Sicherheitsgerichtet wird auch als "fail safe" (= ausfallsicher) bezeichnet.

Der Sicherheitssignaleingang zum Empfang von Sicherheitssignalen gemäß der vorliegenden Erfindung ist ein sicherheitsgerichteter Eingang der Steuereinheit. Die Steuereinheit führt interne Tests aus, um Fehler an dem Sicherheitssignaleingang zu erkennen. Auf diese Weise wird sichergestellt, dass ein am Sicherheitssignaleingang ankommendes Sicherheitssignal, welches das Vorliegen einer Gefahrensituation abbildet, korrekt von der Steuereinheit empfangen wird. Dazu kann die Steuereinheit Testmuster, z.B. sogenannte Bitmustertests wie Hell- und/oder Dunkel-Tests, auf den Sicherheitssignaleingang aufschalten und über Ausgänge zurücklesen. Die so erhaltenen Werte werden mit einem Sollwert verglichen, wodurch es möglich ist, Fehler am Sicherheitssignaleingang zu erkennen.

Steuersignaleingänge zum Empfang von Betriebssteuersignalen können zwar in gewissem Rahmen auch Fehlererkennungs- und Fehlervermeidungsmaßnahmen unterliegen, diese sind jedoch in aller Regel nicht ausreichend, um das sichere Abschalten der Anlage unter allen Umständen zu gewährleisten. In Abgrenzung von einem "einfachen" Steuersignaleingang zum Empfang von Betriebssteuersignalen bezieht sich der Begriff "Sicherheitssignaleingang zum Empfang von Sicherheitssignalen" der vorliegenden Erfindung auf einen Signaleingang mit einer Sicherheitsfunktion, der zumindest die Kategorie 2 der ISO 13849-1 oder vergleichbare Sicherheitsanforderungen erfüllt.

Der erfindungsgemäße Sanftstarter ist folglich dazu geeignet, mit dem Betriebssteuersignal, das einen Benutzerwillen abbildet, und dem Sicherheitssignal, das das Vorliegen einer Gefahrensituation abbildet, zwei betriebsrelevante Informationen separat zu berücksichtigen. Der erfindungsgemäße Sanftstarter weist ein hohes Maß an Sicherheit auf und erreicht in unmittelbarer Verbindung mit dem Elektromotor das Sicherheitsintegritätslevel SIL 2 gemäß der Norm IEC 61508. Eine bisher notwendige Kombination eines Sanftstarters mit einem zusätzlichen Schütz zur Erreichung von SIL 2 ist damit entbehrlich. Der erfindungsgemäße Sanftstarter erreicht somit bei verringerter Komponenten- und Bauteilanzahl ein zumindest gleichbleibendes Maß an Sicherheit.

In einer bevorzugten Ausführungsform des erfindungsgemäßen Sanftstarters wird der Sicherheitssignaleingang einem Hell- und/oder einem Dunkel-Test unterzogen. Dabei können Testmuster, z.B. sogenannte Bitmustertests, auf den Sicherheitssignaleingang aufgeschaltet und über Ausgänge zurückgelesen werden. Die so erhaltenen Werte werden mit einem Sollwert verglichen, wodurch es möglich ist, Fehler zu erkennen. Die Ausführung eines solchen Sicherheitssignaleingangs ist dabei abhängig vom gewünschten Sicherheitslevel der Baugruppe.

In einer bevorzugten Ausführungsform des erfindungsgemäßen Sanftstarters werden die Sicherheitssignale, die den Sicherheitssignaleingang erreichen, von einem Signalausgang gesendet, der einem Hell- und/oder einem Dunkel-Test unterzogen wird. Dabei ist es möglich, dass der Sicherheitssignaleingang Sicherheitssignale von einem fehlersicheren Ausgangssmodul, insbesondere einem digitalen Ausgangssmodul, empfängt. Solche fehlersicheren Ausgangsschaltungen werden beispielsweise als fehlersichere Peripheriebaugruppen in der industriellen Automatisierungstechnik, insbesondere der Prozessautomatisierung, eingesetzt. Bei solchen fehlersicheren Peripheriebaugruppen dürfen Prozesswerte nur dann ausgegeben werden, wenn der Ausgang fehlerfrei ist. Zu diesem Zweck werden üblicherweise die Ausgänge getestet. Dabei werden Testmuster, z.B. sogenannte Bitmustertests, aufgeschaltet und über Eingänge zurückgelesen. Die so erhaltenen Werte werden mit einem Sollwert verglichen, wodurch es möglich ist, Fehler zu erkennen. Die Ausführung eines solchen Ausgangs ist dabei abhängig vom gewünschten Sicherheitslevel der Baugruppe.

Vorzugsweise unterscheidet sich ein Sicherheitssignal von einem "normalen" Betriebssteuersignal dadurch, dass das Sicherheitssignal von einer sicherheitsgerichteten Schaltung bzw. Steuerung gesendet wird. Eine sicherheitsgerichtete Schaltung bzw. Steuerung ist durch Maßnahmen wie redundante Signalverarbeitungskanäle, regelmäßige Selbsttests und dergleichen eigenfehlersicher aufgebaut.

In einer bevorzugten Ausführungsform des erfindungsgemäßen Sanftstarters ist der zum Empfang von Sicherheitssignalen vorgesehene Sicherheitssignaleingang ein fehlersicheres Eingangsmodul, insbesondere ein digitales Eingangsmodul. Ein Beispiel für einen solchen Sicherheitssignaleingang ist ein fehlersicheres digitales Eingangsmodul F-DI (= Failsafe Digital Input) des Steuerungssystems SIMATIC der Siemens AG. Das digitale Eingangsmodul F-DI empfängt z.B. Sicherheitssignale von einer digitalen Ausgangsschaltung, einem fehlersicheren digitalen Ausgangsmodul F-DO (= Failsafe Digital Output) des Steuerungssystems SIMATIC der Siemens AG. Dabei führt das F-DO Ausgangsmodul zu definierten Zeitpunkten, z.B. alle 15 Minuten, einen Bitmustertest durch. Dabei legt die Baugruppe mehrere Bitmuster an ihre Ausgänge, um Fehler, z.B. einen Kurzschluss, Masseschluss oder einen Erdschluss zu erkennen. Der Bitmustertest kann einen Dunkel- und/oder einen Helltest umfassen. Parallel dazu führt das F-DI Eingangsmodul zu definierten Zeitpunkten, z.B. alle 15 Minuten, einen Bitmustertest durch. Dabei legt die Baugruppe mehrere Bitmuster an ihre Eingänge, um Fehler, z.B. einen Kurzschluss, Masseschluss oder einen Erdschluss zu erkennen. Der Bitmustertest kann einen Dunkel- und/oder einen Helltest umfassen.

In einer bevorzugten Ausführungsform des erfindungsgemäßen Sanftstarters ist die Steuereinheit dazu ausgebildet, das Sicherheitssignal vom Sicherheitssignaleingang und das Betriebssteuersignal vom Steuersignaleingang zu erfassen und zu prüfen. Das Sicherheitssignal und das Betriebssteuersignal können jeweils nur zwei Zustände einnehmen. In einem der Zustände wird ein Betrieb des angeschlossenen Elektromotors befohlen und im anderen Zustand wird ein Betriebsstopp des Elektromotors befohlen. Die Steuereinheit ist dazu geeignet, den Inhalt des Sicherheitssignals und des Betriebssteuersignals zu erkennen. Wird erkannt, dass das Sicherheitssignal und/oder das Betriebssteuersignal einen Betriebsstopp des Elektromotors befehlen, ist die Steuereinheit dazu ausgelegt, darauf mit einem Unterbrechen der mindestens einen Hauptstrombahn zu reagieren. Das Unterbrechen wird durch Ausgeben eines entsprechenden Deaktivierungsbefehls durchgeführt. Beispielsweise wird durch ein Unterbrechen der Hauptstrombahn ein Stopp des Elektromotors vom Typ "Safe Torque off", kurz STO, erreicht. Alternativ wird durch den Deaktivierungsbefehl eine Auslaufsequenz eingeleitet. Die Erfassung des Sicherheitssignals und des Betriebssteuersignals integriert in einfacher Weise eine sicherheitsgerichtete Funktion in den erfindungsgemäßen Sanftstarter. Dieser Aufbau erlaubt ein hohes Maß an Modularität, so dass der Sanftstarter ohne Weiteres als Austauschteil bei einer Nachrüstung eines bestehenden Schaltsystems eingesetzt werden kann.

Des Weiteren kann die Steuereinheit im erfindungsgemäßen Sanftstarter je vorhandener Hauptstrombahn mindestens einen Messsignaleingang aufweisen, über den Signale von einem Messmittel zur Steuereinheit transportiert werden. Das Messmittel ist dabei an einer Komponente der Bypass-Schaltung angeordnet und liefert mindestens eine Betriebsgröße der Bypass-Schaltung. Eine Betriebsgröße der Bypass-Schaltung kann beispielsweise ein Stromfluss in einer der Hauptstrombahnen sein, eine Spannung, die im geöffneten Zustand an der Bypass-Schaltung anliegt, ein Ansteuersignal des Halbleiterschalters, insbesondere eines Zündbefehls, und/oder ein Aktivitätssignal eines Antriebs des elektromechanischen Schalters. Über ein derartiges Messmittel ist eine unmittelbare Erfassung des Betriebszustands der Bypass-Schaltung möglich. Dies gewährleistet eine Überwachung daraufhin, ob der von der Steuereinheit vorgegebene Betriebszustand auch erreicht wird, und gegebenenfalls eine Fehlerdiagnose. Insgesamt wird hierdurch der mögliche Funktionsumfang des erfindungsgemäßen Sanftstarters vergrößert.

In einer weiteren Ausführungsform der Erfindung ist die Steuereinheit mit einer Rückmeldeeinheit verbunden, die dazu ausgebildet ist, an Komponenten außerhalb des Sanftstarters ein Rückmeldesignal auszugeben. Das Rückmeldesignal ist dabei vorzugsweise binär und korrespondiert mit dem Schaltzustand, der in der jeweiligen Bypass-Schaltung vorliegt. Die Steuereinheit ist dazu geeignet, aus den vorliegenden Signalen, also dem Betriebssteuersignal, dem Sicherheitssignal, mindestens einer Betriebsgröße und/oder einer Kombination von Betriebsgrößen den Betriebszustand des Halbleiterschalters zu ermitteln und als binäres Signal an die Rückmeldeeinheit auszugeben. Beispielsweise zeigt ein vorhandener Strom in einer Hauptstrombahn einen geschlossenen Zustand der Bypass-Schaltung an. Eine vorhandene Spannung über der Bypass-Schaltung wiederum zeigt einen offenen Zustand der Bypass-Schaltung an. Darüber hinaus zeigt ein Aktivitätssignal des Antriebs des elektromagnetischen Schalters einen gewünschten Dauerbetrieb der Bypass-Schaltung an. Ein solches Aktivitätssignal ist beispielsweise die Stromversorgung einer Spule. Ein vorhandenes Ansteuersignal des Halbleiterschalters, beispielsweise eines Zündbefehls an einen Thyristor, zeigt einen gewünschten Phasenanschnittsbetrieb der Bypass-Schaltung an. Eine Kombination von mehreren dieser Betriebsgrößen erlaubt es, mit hoher Sicherheit den Betriebszustand der jeweiligen Bypass-Schaltung festzustellen. Ein entsprechendes Rückmeldesignal bildet damit in abstrakter Form die Funktion eines zwangsgeführten Meldekontakts in einen Schütz ab und weist den gleichen Funktionsumfang wie ein solcher auf. Dazu gehört auch das Melden von Fehlern, die durch zyklische Tests erkannt werden. Dadurch ist der erfindungsgemäße Sanftstarter ohne Weiteres in vorhandene Schaltsysteme integrierbar und ohne Modifikationen mit einer übergeordneten Steuerinstanz, wie einer speicherprogrammierbaren Steuerung, koppelbar. Der Sanftstarter bietet bei reduziertem Hardwareaufwand ein breites Funktionsspektrum und ist dabei kompakt und wirtschaftlich herstellbar.

Besonders bevorzugt ist die Rückmeldeeinheit als Relais ausgebildet, das zwangsgekoppelte Schaltkontakte aufweist und an zwei Strombahnen angeschlossen ist. In Abhängigkeit vom Zustand, der durch das Rückmeldesignal gemeldet ist, entsteht damit ein korrespondierendes Signal in den zwei angeschlossenen Strombahnen. Dabei ist mindestens eine der Strombahnen des Relais mit der Steuereinheit verbunden. Folglich wird im Relais ein zum Rückmeldesignal korrespondierendes Spiegelsignal erzeugt, das an die Steuereinheit zurückgeführt wird. Die Steuereinheit ist dazu geeignet, das Spiegelsignal auf Konsistenz bzw. Diskrepanz mit dem selbst ermittelten Betriebszustand zu überprüfen. Infolge dessen ist die Steuereinheit dazu in der Lage, den an außerhalb liegende Komponenten gemeldeten Betriebszustand der mindestens einen Bypass-Schaltung des Sanftstarters auf Richtigkeit zu prüfen. Hierdurch können in einem Schaltsystem, in den der erfindungsgemäße Sanftstarter eingesetzt wird, Betätigungsfehler durch eine übergeordnete Steuerinstanz oder einen Benutzer vermieden werden. Insgesamt wird das erzielbare Maß an Sicherheit durch den erfindungsgemäßen Sanftstarter weiter gesteigert.

In einer bevorzugten Ausführungsform des beanspruchten Sanftstarters ist in der mindestens einen Hauptstrombahn ein Zusatz-Halbleiterschalter in Reihe mit der jeweiligen Bypass-Schaltung angeordnet. Alternativ oder ergänzend kann in der mindestens einen Hauptstrombahn auch ein zusätzlicher elektromechanischer Schalter in Reihe mit der jeweiligen Bypass-Schaltung angeordnet sein. Dabei wird eine Hardware-Redundanz erzeugt, die dem erfindungsgemäßen Sanftstarter ein weiter erhöhtes Maß an Ausfallsicherheit verleiht. Beispielsweise kann dadurch ein Versagen des Halbleiterschalters oder des elektromechanischen Schalters in der Bypass-Schaltung kompensiert werden. Der beanspruchte Sanftstarter ist kompakt in seinem Aufbau und bietet deshalb ausreichend Bauraum für zusätzliche Hardware-Komponenten, wie elektromechanische Schalter und Halbleiterschalter, so dass bei gleichbleibendem Platzbedarf ein noch höheres Maß an Sicherheit verwirklicht werden kann.

Zusätzlich kann der Sanftstarter auch mit einem integrierten Auswerteschaltgerät ausgestattet sein. Die erfindungsgemäße Lösung ist derart bauraumsparend, dass die Integration eines Auswerteschaltgeräts ohne Weiteres möglich ist.

Die zugrundeliegende Aufgabenstellung wird auch durch ein Betriebsverfahren für einen Elektromotor gemäß Anspruch 7 gelöst, der mittels eines Sanftstarters angesteuert wird. Der Sanftstarter weist eine Steuereinheit auf, mit der eine Bypass-Schaltung betätigbar ist, die in mindestens einer Hauptstrombahn angeordnet ist. Die mindestens eine Hauptstrombahn versorgt den Elektromotor dabei mit Energie. Die Bypass-Schaltung weist einen Halbleiterschalter auf, zu dem parallel ein elektromechanischer Schalter angeordnet ist. Das erfindungsgemäße Verfahren ist auf einen sicheren Betrieb des Elektromotors über den Sanftstarter ausgelegt und umfasst einen ersten Verfahrensschritt, in dem ein Dauerbetrieb des Elektromotors vorliegt. Bei einem Sanftstarter mit elektromechanischen Schalter in der Bypass-Schaltung ist der elektromechanische Schalter im Dauerbetrieb in der mindestens einen Hauptstrombahn geschlossen und der parallele Halbleiterschalter offen. In einem weiteren Verfahrensschritt wird über einen Steuersignaleingang der Steuereinheit ein Betriebssteuersignal empfangen, das entweder einen Betrieb oder einen Stopp des Elektromotors vorgibt. In einem weiteren Verfahrensschritt, der sequenziell oder parallel zum Empfangen des Betriebssteuersignals abläuft, wird ein Sicherheitssignal über einen separaten Sicherheitssignaleingang der Steuereinheit empfangen. Auch das Sicherheitssignal ist dazu ausgebildet, entweder einen Betrieb des Elektromotors oder einen Betriebsstopp des Elektromotors vorzugeben. Das Sicherheitssignal wird dabei von einem sicherheitsgerichteten Meldegerät, wie beispielsweise einem Not-Aus-Schalter, einer Lichtschranke, einem Sicherheitsschaltgerät oder einer F-SPS erzeugt (F-SPS = fehlersichere SPS).

In einem weiteren Verfahrensschritt werden das Betriebssteuersignal und das Sicherheitssignal erfasst und geprüft. Der Dauerbetrieb des Elektromotors wird aufrechterhalten, solange das Betriebssteuersignal und das Sicherheitssignal gleichzeitig einen Befehl des Elektromotors befehlen. In einem anschließenden Verfahrensschritt wird ein Deaktivierungsbefehl an die Bypass-Steuerung ausgegeben, wenn durch das Sicherheitssignal und/oder das Betriebssteuersignal ein Betriebsstopp befohlen wird. Der Deaktivierungsfehl kann dabei einen Befehl zur Abschaltung des elektromechanischen Schalters und/oder eine entsprechende Sequenz von Befehlen an den Halbleiterschalter umfassen. Ergänzend oder alternativ kann der Deaktivierungsbefehl an die Bypass-Schaltung auch ein Unterbinden von Zündbefehlen an den Halbleiterschalter umfassen oder eine kontrollierte Auslaufsequenz befehlen.

Im erfindungsgemäßen Verfahren wird damit neben dem Betriebssteuersignal auch gleichzeitig ein Sicherheitssignal zur Verfügung gestellt und unmittelbar in dessen Steuereinheit ausgewertet. Es wird eine hohe funktionelle Integration erzielt und das Sicherheitsintegritätslevel SIL 2 gemäß IEC 61508 erreicht. Auf ein zusätzliches Schütz kann zur Erreichung dem Sicherheitsintegritätslevel SIL 2 verzichtet werden. Das beanspruchte Betriebsverfahren ist einfach und wirtschaftlich in Sanftstartern umsetzbar.

In einer bevorzugten Ausführungsform des erfindungsgemäßen Betriebsverfahrens wird in einem anschließenden Verfahrensschritt ein Aktivierungsbefehl an die Bypass-Schaltung ausgegeben, so dass der Elektromotor wieder in Betrieb genommen wird. Der Aktivierungsbefehl wird von der Steuereinheit ausgegeben, wenn als Sicherheitssignal und als Betriebssteuersignal jeweils gleichzeitig ein Betriebsbefehl des Elektromotors empfangen wird. Vorzugsweise wird der Aktivierungsbefehl von der Steuereinheit ausgegeben, wenn ein Übergang des Betriebssteuersignals von einem Stopp-Befehl auf einen Betriebsbefehl erkannt wird. Hierdurch wird verhindert, dass beispielsweise der Elektromotor über einen Not-Aus-Schalter oder eine Lichtschranke deaktiviert wird, und dann nach einem Zurücksetzen des Not-Aus-Schalters oder der Lichtschranke ein unkontrollierter Wiederanlauf erfolgt. Das Umschalten des Betriebssteuersignals von einem Stopp-Befehl auf einen Betriebsbefehl stellt einen vom Benutzer oder der übergeordneten Steuerinstanz durchgeführten gezielten Steuereingriff dar, so dass auch hierdurch ein hohes Maß an Sicherheit gewährleistet ist.

In einer besonders bevorzugten Ausführungsform des erfindungsgemäßen Betriebsverfahrens ist die mindestens eine Betriebsgröße ein Stromfluss in einer der Hauptstrombahnen, eine Spannung über der Bypass-Schaltung, ein Ansteuersignal des Halbleiterschalters, ein Aktivitätssignals eines Antriebs des elektromechanischen Schalters und/oder ein Zündsignal an den Halbleiterschalter.

Darüber hinaus kann im erfindungsgemäßen Betriebsverfahren auf Basis der mindestens einen Betriebsgröße oder einer Kombination von Betriebsgrößen der Bypass-Schaltung ein Rückmeldesignal ermittelt werden, das den Betriebszustand der Bypass-Schaltung darstellt. Das Rückmeldesignal wird über eine Rückmeldeeinheit an Komponenten außerhalb des Sanftstarters weitergeleitet. Ferner kann in der Rückmeldeeinheit ein Spiegelsignal erzeugt werden, das mit dem Rückmeldesignal korrespondiert. Das Spiegelsignal wird an die Steuereinheit zurückgeführt, so dass der nach außen gemeldete Zustand der mindestens einen Bypass-Schaltung überwachbar ist. Hierdurch wird das erzielte Maß an Sicherheit weiter gesteigert.

Die zugrunde liegende Aufgabenstellung wird gleichermaßen von einem Schaltsystem gelöst, das dazu ausgebildet ist, mindestens eine Hauptstrombahn zu schalten, über die ein Elektromotor mit Energie versorgt wird. Das Schaltsystem umfasst ein Sicherheitsschaltgerät, das mit einem elektromechanischen Schaltgerät, beispielsweise einem Schütz, zusammenwirkt. Das elektromechanische Schaltgerät ist dabei an die mindestens eine Hauptstrombahn angeschlossen und in Reihe geschaltet mit einem Sanftstarter gemäß einer der oben beschriebenen Ausführungsformen. Durch das elektromechanische Schaltgerät wird im erfindungsgemäßen Schaltsystem eine Hardware-Fehlertoleranz von 1 erreicht, so dass ein Sicherheitsintegritätslevel SIL 3 gewährleistet ist. Ein zweites elektromechanisches Schaltgerät, wie bisher im Stand der Technik für SIL 3 erforderlich, ist im erfindungsgemäßen Schaltsystem entbehrlich. Hierdurch bietet das beanspruchte Schaltsystem ein erhöhtes Maß an Sicherheit bei reduzierter Bauteilanzahl und verringertem Bauraumbedarf. Die Einfachheit und Kompaktheit des erfindungsgemäßen Schaltsystems erlauben eine einfache und wirtschaftliche Herstellung. Darüber hinaus kann ein Befehlsausgang des Sicherheitsschaltgerätes mit einem Betriebssteuermittel verbunden sein, mit dem das Betriebssteuersignal erzeugt wird. Ein Aktivierungs- oder Deaktivierungsbefehl vom Sicherheitsschaltgerät erreicht den erfindungsgemäßen Sanftstarter damit über das Betriebssteuermittel am Steuersignaleingang. Gleichermaßen ist der Befehlsausgang des Sicherheitsschaltgerätes unmittelbar mit dem Sicherheitseingang des Sanftstarters verbunden. Zusätzlich kann ein zweiter Befehlsausgang des Sicherheitsschaltgerätes unmittelbar mit dem elektromechanischen Schaltgerät verbunden sein. Hierdurch wird eine redundante Schaltung der mindestens einen Hauptstrombahn erzielt. Die so erzielte Redundanz und Diversität gewährleistet dabei das Sicherheitsintegritätslevel SIL 3.

Die zugrundeliegende Aufgabenstellung wird auch durch ein Programm gemäß Anspruch 14 gelöst, das zur Speicherung und Durchführung in einer Steuereinheit mit einem Speicher und einem Rechenwerk ausgebildet ist. Erfindungsgemäß ist das Programm dazu ausgebildet, das erfindungsgemäße Betriebsverfahren in mindestens einer der oben skizzierten Ausführungsformen an einem Sanftstarter durchzuführen. Die erfindungsgemäße Lösung wird im Wesentlichen durch eine Programmierung umgesetzt, so dass eine funktionelle Erweiterung des erfindungsgemäßen Betriebsverfahrens nur minimalen Hardware-Beschränkungen unterworfen ist. Infolge dessen ist die erfindungsgemäße Lösung vielseitig und erweiterbar.

Die Erfindung wird im Folgenden anhand von einzelnen Ausführungsformen in den Figuren näher erläutert. Merkmale einzelner Ausführungsformen können im Rahmen des fachlichen Hintergrundwissens ohne Weiteres miteinander kombiniert werden. Es zeigt im Einzelnen
- FIG 1: eine erste Ausführungsform des erfindungsgemäßen Schaltsystems mit einem Sanftstarter;
- FIG 2: eine zweite Ausführungsform des erfindungsgemäßen Schaltsystems mit einem Sanftstarter und einem elektromechanischen Schaltgerät;
- FIG 3: ein Zeit-Größen-Diagramm einer ersten Ausführungsform des erfindungsgemäßen Betriebsverfahrens;
- FIG 4: eine zweite Ausführungsform des erfindungsgemäßen Betriebsverfahrens.
- FIG 5: eine dritte Ausführungsform des erfindungsgemäßen Schaltsystems mit einem Sanftstarter.

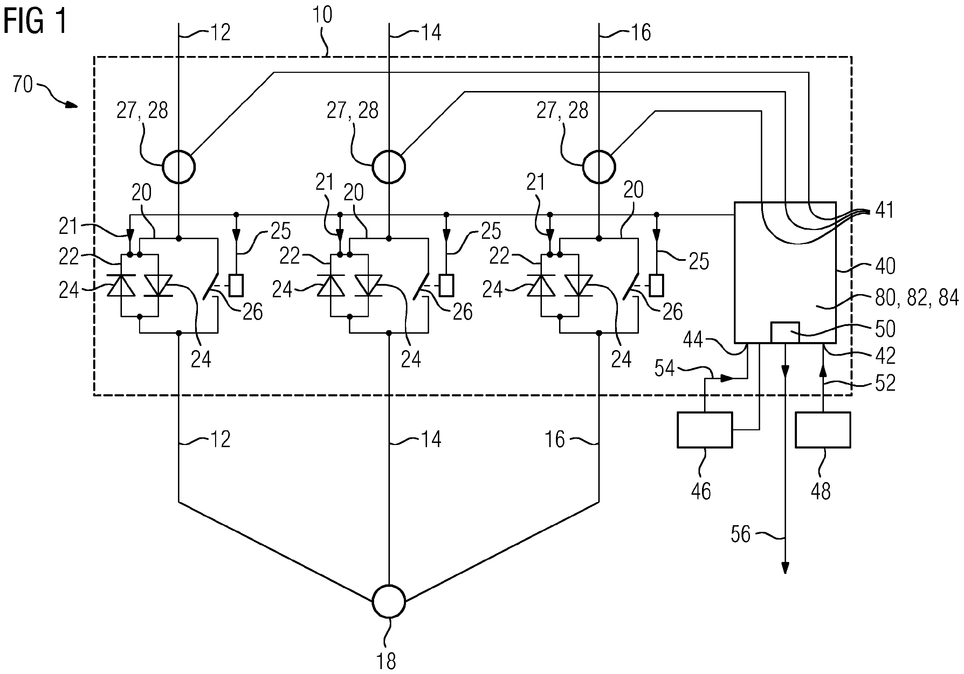

In FIG 1 ist eine erste Ausführungsform eines Schaltsystems 70 mit einem erfindungsgemäßen Sanftstarter 10 dargestellt. Der Sanftstarter 10 ist an drei Hauptstrombahnen 12, 14, 16 einer dreiphasigen Stromversorgung eines Elektromotors 18 angeschlossen. Im Sanftstarter 10 ist jeder der Hauptstrombahnen 12, 14, 16 eine Bypass-Schaltung 20 zugeordnet, die jeweils einen Halbleiterschalter 22 und einen elektromechanischen Schalter 26 umfasst. Der Halbleiterschalter 22 ist in der Ausführungsform nach FIG 1 als ein antiparallel angeordnetes Paar von Thyristoren 24 ausgebildet. Die elektromechanischen Schalter 26 sind in FIG 1 als Relais ausgebildet. Jeder der Halbleiterschalter 22 und der elektromechanischen Schalter 26 ist mit einer Steuereinheit 40 verbunden, die den Sanftstarter 10 im Betrieb steuert. Die Steuereinheit 40 ist dazu ausgebildet, Zündbefehle 21 an die Halbleiterschalter 22 und Betätigungsbefehle 25 an die elektromechanischen Schalter 26 zu senden. Die Zündbefehle 21 und die Betätigungsbefehle 25 werden die Halbleiterschalter 22 und die elektromechanischen Schalter 26 jeweils geöffnet und geschlossen. Die elektromechanischen Schalter 26 sind im Dauerbetrieb des Elektromotors 18 geschlossen und die Halbleiterschalter 22 geöffnet. Die Halbleiterschalter 22 dienen dazu, eine definierte Anlaufsequenz und Auslaufsequenz des Elektromotors 18 zu steuern. In der Steuereinheit 40 ist ein Programm 80 in einem Speicher 82 gespeichert und über ein Rechenwerk 84 ausführbar. Das Programm 80 ist unter anderem dazu ausgebildet, mittels der Halbleiterschalter 22 eine Phasenanschnittsteuerung bzw. eine Phasenabschnittsteuerung zu verwirklichen.

Ferner ist jeder Hauptstrombahn 12, 14, 16 ein als Messwandler 28 ausgebildetes Messmittel 27 zugeordnet, das dazu ausgebildet ist, einen Stromfluss in einer der Hauptstrombahnen 12, 14, 16 zu erfassen und/oder zu messen. Jedes der Messmittel 27 ist über einen Messsignaleingang 41 mit der Steuereinheit 40 gekoppelt. Das Programm 80 in der Steuereinheit 40 ist dazu ausgebildet, eine von den Messmitteln 27 erfasste Betriebsgröße, also unter anderem den Stromfluss in den Hauptstrombahnen 12, 14, 16, zu empfangen und auszuwerten.

Darüber hinaus ist die Steuereinheit 40 mit einem Steuersignaleingang 44 versehen, über den Betriebssteuersignale 54 empfangen werden. Die Betriebssteuersignale 54 werden von einem Betriebssteuermittel 46 erzeugt, das sich außerhalb des Sanftstarters 10 befindet. Über die Betriebssteuersignale 54 wird der Elektromotor 18 im Rahmen eines geplanten Betriebsablaufs, beispielsweise eines Programmablaufs oder eines willentlichen Benutzereingriffs, gesteuert. Die Steuereinheit 40 ist erfindungsgemäß mit einem separaten Sicherheitssignaleingang 42 ausgestattet, über den ein Sicherheitssignal 52 empfangen wird. Die Sicherheitssignale 52 werden von einem sicherheitsgerichteten Meldegerät 48, beispielsweise einem Not-Aus-Schalter oder einer Lichtschranke, erzeugt. Erfindungsgemäß ist der Sanftstarter 10 dazu ausgebildet, während des Betriebs das Betriebssteuersignal 54 und das Sicherheitssignal 52 daraufhin zu überprüfen, ob zumindest eines der Signale 52, 54 einen Betriebsstopp des Elektromotors 18 vorgibt. Die Steuereinheit 40 ist ferner dazu ausgebildet, unter Einbeziehung der über die Messsignaleingänge 41 empfangenen Daten, den vorliegenden Zustand der Bypass-Schaltungen 20 zu erkennen. Mittels der Rückmeldeeinheit 50 ist ein Rückmeldesignal 56 erzeugbar, das den Schaltzustand von mindestens einer Bypass-Schaltung abbildet. Das Rückmeldesignal 56 wird nach außen gesendet, so dass weitere Komponenten eines nicht näher dargestellten Automatisierungssystems diese Information empfangen können. In der Rückmeldeeinheit 50 wird basierend auf dem Rückmeldesignal 56 ein dazu korrespondierendes Spiegelsignal 58 erzeugt. Das Spiegelsignal 58 ist wiederum von der Steuereinheit 40 auswertbar. Dadurch ist eine Konsistenz, oder gegebenenfalls eine Diskrepanz zwischen dem vorliegenden Betriebszustand der entsprechenden Bypass-Schaltung 20 und dem im Rückmeldesignal 56 dargestellten Betriebszustand erkennbar.

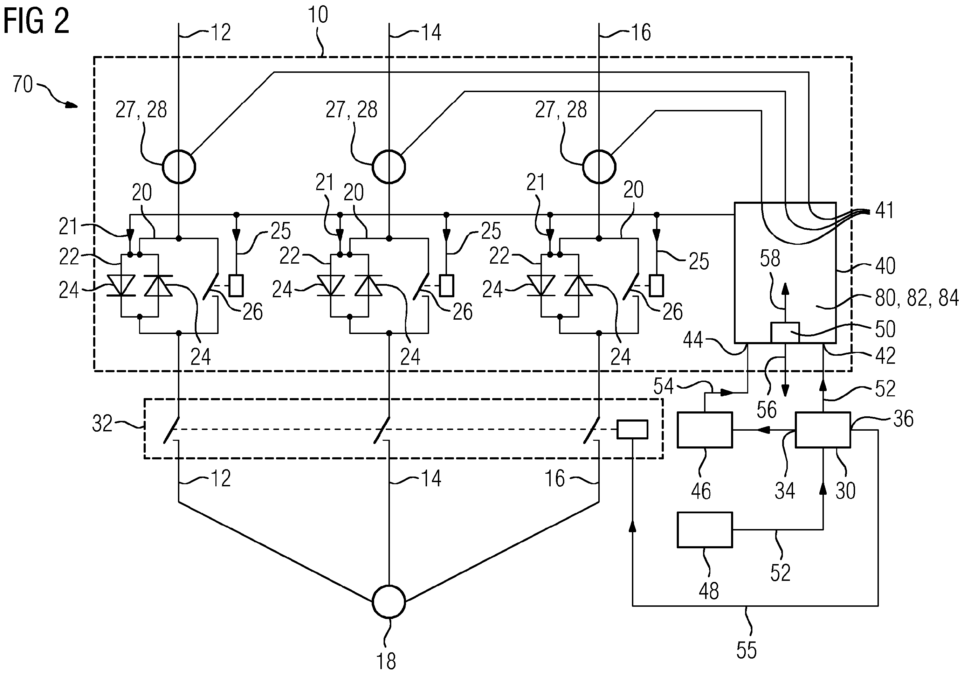

In FIG 2 ist eine erste Ausführungsform eines Schaltsystems 70 mit einem erfindungsgemäßen Sanftstarter 10 dargestellt. Der Sanftstarter 10 ist an drei Hauptstrombahnen 12, 14, 16 einer dreiphasigen Stromversorgung eines Elektromotors 18 angeschlossen. Im Sanftstarter 10 ist jeder der Hauptstrombahnen 12, 14, 16 eine Bypass-Schaltung 20 zu geordnet, die jeweils einen Halbleiterschalter 22 und einen elektromechanischen Schalter 26 umfasst. Der Halbleiterschalter 22 ist in der Ausführungsform nach FIG 2 als ein antiparallel angeordnetes Paar von Thyristoren 24 ausgebildet. Die elektromechanischen Schalter 26 sind in FIG 2 als Relais ausgebildet. Jeder der Halbleiterschalter 22 und der elektromechanischen Schalter 26 ist mit einer Steuereinheit 40 verbunden, die den Sanftstarter 10 im Betrieb steuert. Die Steuereinheit 40 ist dazu ausgebildet, Zündbefehle 21 an die Halbleiterschalter 22 und Betätigungsbefehle 25 an die elektromechanischen Schalter 26 zu senden. Die Zündbefehle 21 und die Betätigungsbefehle 25 werden die Halbleiterschalter 22 und die elektromechanischen Schalter 26 jeweils geöffnet und geschlossen. Die elektromechanischen Schalter 26 sind im Dauerbetrieb des Elektromotors 18 geschlossen und die Halbleiterschalter 22 geöffnet. Die Halbleiterschalter 22 dienen dazu, eine definierte Anlaufphase und Auslaufphase des Elektromotors 18 zu steuern. In der Steuereinheit 40 ist ein Programm 80 in einem Speicher 82 gespeichert und über ein Rechenwerk 84 ausführbar. Das Programm 80 ist unter anderem dazu ausgebildet, mittels der Halbleiterschalter 22 eine Phasenanschnittsteuerung bzw. eine Phasenabschnittsteuerung zu verwirklichen.

Ferner ist jeder Hauptstrombahn 12, 14, 16 ein als Messwandler 28 ausgebildetes Messmittel 27 zugeordnet, der dazu ausgebildet ist, einen Stromfluss in einer der Hauptstrombahnen 12, 14, 16 zu erfassen und/oder zu messen. Jedes der Messmittel 27 ist über einen Messsignaleingang 41 mit der Steuereinheit 40 gekoppelt. Das Programm 80 in der Steuereinheit 40 ist dazu ausgebildet, eine von den als Messmitteln 27 erfasste Betriebsgröße, also unter anderem den Stromfluss in den Hauptstrombahnen 12, 14, 16 zu empfangen und auszuwerten.

Darüber hinaus ist die Steuereinheit 40 mit einem Steuersignaleingang 44 versehen, über den Betriebssteuersignale 54 empfangen werden. Die Betriebssteuersignale 54 werden von einem Betriebssteuermittel 46 erzeugt, das sich außerhalb des Sanftstarters 10 befindet. Über die Betriebssteuersignale 54 wird das Elektromotor 18 im Rahmen eines geplanten Betriebsablaufs, beispielsweise eines Programmablaufs oder eines willentlichen Benutzereingriffs, gesteuert. Das Betriebssteuermittel 46 wiederum ist über ein Sicherheitsschaltgerät 30 über einen ersten Befehlsausgang 34 ansteuerbar. Das Sicherheitsschaltgerät 30 ist ferner dazu ausgebildet, von einem sicherheitsgerichteten Meldegerät 48, beispielsweise einem Not-Aus-Schalter oder einer Lichtschranke, ein Sicherheitssignal 52 zu empfangen. Das Sicherheitssignal 52 wird vom Sicherheitsschaltgerät 30 über einen Sicherheitssignaleingang 42 an die Steuereinheit 40 gesendet. Das Sicherheitsschaltgerät 30 verfügt über einen zweiten Befehlsausgang 36, über den ein elektromechanisches Schaltgerät 32, das in FIG 2 als Schütz ausgebildet ist, angesteuert wird. Über den zweiten Befehlsausgang 36 wird ein Schaltbefehl 55 zum Öffnen bzw. Schließen des elektromechanischen Schaltgeräts 32 ausgegeben, wenn das Sicherheitsschaltgerät 30 über das sicherheitsgerichtete Meldegerät 48 und/oder das Betriebssteuermittel 46 einen entsprechenden Befehl erhält. Der Schaltbefehl 55 ist dabei bestimmungsgemäß kongruent zu den Zündbefehlen 21 und Betätigungsbefehlen 25 in den Bypass-Schaltungen 20. Durch das elektromechanische Schaltgerät 32 erreicht das in FIG 2 skizzierte Schaltsystem 70 eine Hardware-Fehlertoleranz von mindestens Eins. Hierdurch erreicht das Schaltsystem 70 gemäß FIG 2 das Sicherheitsintegritätslevel SIL 3.

Erfindungsgemäß ist der Sanftstarter 10 dazu ausgebildet, während des Betriebs das Betriebssteuersignal 54 und das Sicherheitssignal 52 daraufhin zu überprüfen, ob zumindest eines der Signale einen Betriebsstopp des Elektromotors 18 vorgibt. Die Steuereinheit 40 ist ferner dazu ausgebildet, unter Einbeziehung der über die Messsignaleingänge 41 empfangenen Daten den vorliegenden Zustand der Bypass-Schaltungen 20 zu erkennen. Mittels der Rückmeldeeinheit 50 ist ein Rückmeldesignal 56 erzeugbar, das den Schaltzustand von mindestens einer Bypass-Schaltung abbildet. Das Rückmeldesignal 56 wird nach außen gesendet, so dass weitere Komponenten eines nicht näher dargestellten Automatisierungssystems diese Information empfangen können. In der Rückmeldeeinheit 50 wird basierend auf dem Rückmeldesignal 56 ein dazu korrespondierendes Spiegelsignal 58 erzeugt. Das Spiegelsignal 58 ist wiederum von der Steuereinheit 40 auswertbar. Dadurch ist eine Konsistenz, oder gegebenenfalls eine Diskrepanz, zwischen dem vorliegenden Betriebszustand der entsprechenden Bypass-Schaltung 20 und dem im Rückmeldesignal 56 dargestellten Betriebszustand erkennbar.

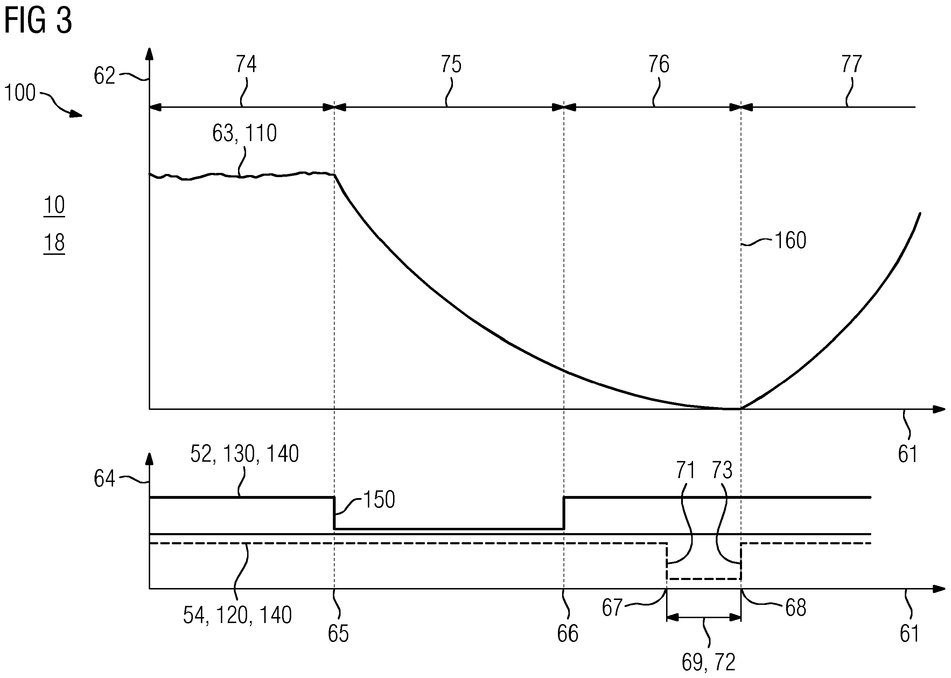

FIG 3 zeigt ein Zeit-Größen-Diagramm einer ersten Ausführungsform des erfindungsgemäßen Betriebsverfahrens 100 für einen Elektromotor 18 mit einem erfindungsgemäßen Sanftstarter 10. Im oberen Bereich von FIG 3 bildet die horizontale Achse die Zeitachse 61 und die vertikale Achse die Größenachse 62, mittels derer ein Verlauf einer Drehzahl 63 dargestellt wird. Im unteren Bereich von FIG 3 ist die vertikale Achse eine Zustandsachse 64, die den Inhalt von Signalen 52, 54 darstellt. Die Zeitachse 61 ist im unteren Bereich von FIG 3 dieselbe wie im oberen Bereich. Im Verfahren 100 liegt nach FIG 3 in einem ersten Verfahrensschritt 110 zunächst eine Dauerbetriebsphase 74 des Elektromotors 18 vor. In der Dauerbetriebsphase 74 weist das Sicherheitssignal 52 und das Betriebssteuersignal 54 einen High-Zustand auf, der in FIG 3 einen Betriebsbefehl für den Elektromotor 18 darstellt. Während der Dauerbetriebsphase 74 laufen parallel eine zweiter und ein dritter Verfahrensschritt 120, 130 ab. Im zweiten Verfahrensschritt 120 werden das Betriebssteuersignal 54 und im dritten Verfahrensschritt 130 das Sicherheitssignal 52 empfangen. In einem vierten Verfahrensschritt 140, der auch parallel abläuft, werden das Sicherheitssignal 52 und das Betriebssteuersignal 54 erfasst und geprüft, ob mindestens eines dieser Signale 52, 54 einen Betriebsstopp des Elektromotors 18 befiehlt.

Die Dauerbetriebsphase 74 endet mit einer Sicherheitsauslösung 65, bei der das Sicherheitssignal 52 einen Low-Zustand einnimmt. Der Low-Zustand stellt in der Ausführungsform nach FIG 3 einen Stopp-Befehl für den Elektromotor 18 dar. Darauf wird in einem fünften Verfahrensschritt 150 von einer Steuereinheit 40 ein entsprechender Deaktivierungsbefehl an nicht näher abgebildete Bypass-Schalter 20 des Sanftstarters 10 gesendet und so die Stromversorgung des Elektromotors 18 unterbrochen. In einer anschließenden Auslaufphase 75 geht die Drehzahl 63 des Elektromotors 18 zurück. In der Auslaufphase 75 verbleibt das Sicherheitssignal 52 im Low-Zustand und das Betriebssteuersignal 54 im High-Zustand. Die Auslaufphase 75 endet durch einen Sicherheits-Reset 66, durch den das Sicherheitssignal 52 erneut einen High-Zustand einnimmt. Dies erfolgt, wenn das Ereignis, das die Sicherheitsauslösung 65 bedingt, wieder rückgängig gemacht ist. In der Reaktivierungsphase 76, in der erneut das Betriebssteuersignal 54 und das Sicherheitssignal 52 wieder im High-Zustand sind, ist die Drehzahl 63 weiterhin rückläufig. Während der Reaktivierungsphase 76 erfolgt ein Steuerungs-Reset 67, in dem das Betriebssteuersignal 54 für eine Reset-Dauer 69 in den Low-Zustand gesteuert wird. Die Reset-Dauer 69 wird begrenzt durch eine abfallende Signalflanke 71 und eine aufsteigende Signalflanke 73. Das Ende des vorübergehenden Low-Zustands 72 bildet auch das Ende der Reaktivierungsphase 76.

Im Verfahren 100 nach FIG 3 wird erst dann ein Aktivierungsbefehl in einem sechsten Verfahrensschritt 160 an die mindestens eine Bypass-Schaltung 20 des Sanftstarters 10 gesendet, wenn nach dem Eintritt einer Sicherheitsauslösung 65 auch das Betriebssteuersignal 54 zumindest eine aufsteigende Signalflanke 73 aufweist. Durch den so einsetzenden Wiederanlauf 68 beginnt eine Wiederanlaufphase 77, in der die Drehzahl 63 des Elektromotors 18 ansteigt.

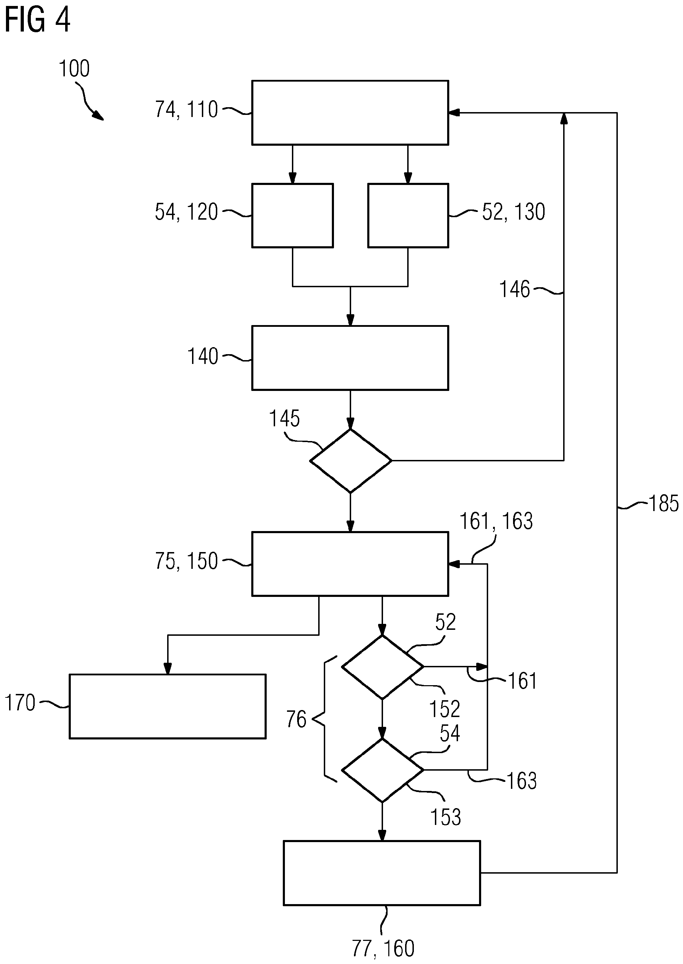

In FIG 4 ist schematisch ein Ablaufschema einer zweiten Ausführungsform des erfindungsgemäßen Betriebsverfahrens 100 dargestellt. Das Betriebsverfahren 100 geht von einem ersten Verfahrensschritt 110 aus, in dem eine Dauerbetriebsphase 74 vorliegt. In einem zweiten und dritten Verfahrensschritt 120, 130 wird ein Betriebssteuersignal 54 und ein Sicherheitssignal 52 von einer nicht näher dargestellten Steuereinheit 40 eines Sanftstarters 10 empfangen. Beide Signale 52, 54 werden in einem weiteren, vierten, Verfahrensschritt 140 daraufhin geprüft, ob zumindest eines der Signale 52, 54 eine Deaktivierung eines Elektromotors 18 mittels des Sanftstarters 10 befiehlt. In Abhängigkeit von der Prüfung im vierten Verfahrensschritt 140 verzweigt sich der Ablauf des Betriebsverfahrens 100 in einer ersten Verzweigung 145. Wenn das Betriebssteuersignal 54 und das Sicherheitssignal 52 einen Betrieb des Elektromotors 18 befehlen, erfolgt eine Rückführung 146 zurück in den ersten Verfahrensschritt 110, und die Dauerbetriebsphase 74 wird aufrechterhalten.

Wenn in der ersten Verzweigung 145 jedoch mindestens eines der Signale 52, 54 einen Betriebsstopp des Elektromotors 18 befiehlt, wird in einem fünften Verfahrensschritt 150 ein Deaktivierungsbefehl an mindestens eine Bypass-Schaltung 20 gesendet und durch die Unterbrechung der Stromversorgung des Elektromotors 18 eine Auslaufphase 75 eingeleitet. Ausgehend davon erreicht der Elektromotor 18 bei Ausbleiben weiterer Ereignisse im Betriebsverfahren 100 den stabilen Endzustand 170, in dem die Drehzahl 63 des Elektromotors 18 Null erreicht.

Ferner wird während der durch den fünften Verfahrensschritt 150 eingeleiteten Auslaufphase 75 in einer zweiten Verzweigung 152 geprüft, ob das Sicherheitssignal 52 wieder einen Betrieb des Elektromotors 18 befiehlt. Wenn das Sicherheitssignal 52 einem Stopp-Befehl entspricht, erfolgt eine Rückführung 161 zum fünften Verfahrensschritt 150. Wenn das Sicherheitssignal 52 einem Betriebsbefehl entspricht, wird in einer dritten Verzweigung 153 das Betriebssteuersignal 54 geprüft. Wenn das Betriebssteuersignal 54 einem Stopp-Befehl entspricht, erfolgt eine Rückführung 163 zum fünften Verfahrensschritt 150. Wenn das Betriebssteuersignal 54 jedoch einem Betriebsbefehl entspricht, beispielweise infolge einer nicht näher dargestellten ansteigenden Flanke 73 des Betriebssteuersignals 54, folgt ein sechster Verfahrensschritt 160. Der Zeitraum, in dem nach dem fünften Verfahrensschritt 150 die Zustände des Sicherheitssignals 52 und des Betriebssteuersignals 54 geprüft werden, bildet die Reaktivierungsphase 76 des Verfahrens 100.

Im sechsten Verfahrensschritt 160 wird durch die Steuereinheit 40 ein Aktivierungsbefehl an die nicht näher dargestellte mindestens eine Bypass-Schaltung 20 ausgegeben und so die Stromversorgung des Elektromotors 18 wiederhergestellt. Nach dem Durchlaufen der Wiederanlaufphase 77 erreicht das Betriebsverfahren 100 wieder einen Dauerbetriebszustand 74 und kehrt über eine Gesamtrückführung 185 in den Ausgangszustand, den ersten Verfahrensschritt 110, zurück.

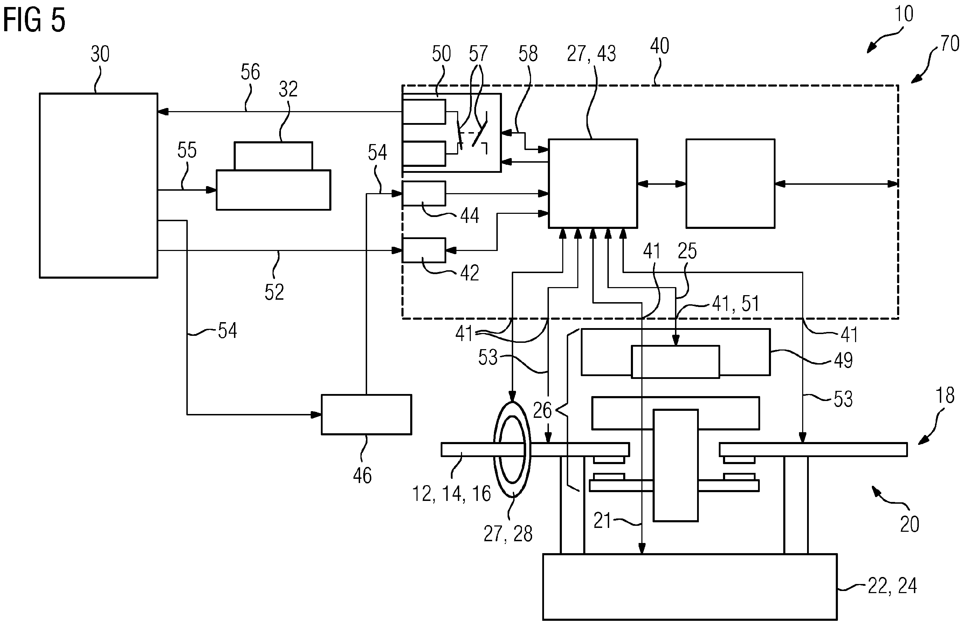

FIG 5 zeigt einen Ausschnitt eines Aufbaus einer dritten Ausführungsform des beanspruchten Schaltsystems 70 mit dem erfindungsgemäßen Sanftstarter 10. Der Sanftstarter 10 weist eine Bypass-Schaltung 20 auf, die einen elektromechanischen Schalter 26 und einen Halbleiterschalter 22 aufweist. Der elektromechanische Schalter 26 ist als ein Relais ausgebildet, das über eine Spule 49 angetrieben wird. Die Aktivierung und Deaktivierung des elektromechanischen Schalters 26 erfolgt über Betätigungsbefehle 25, über die die Bestromung der Spule 49 ein- und ausgeschaltet wird. Der Halbleiterschalter 22 ist aus nicht näher gezeigten antiparallel angeordneten Thyristoren 24 aufgebaut. Eine Steuereinheit 40 des Sanftstarters 10 ist über mehrere Messsignaleingänge 41 mit der Bypass-Schaltung 20 verbunden und erhält mit den so erfassten Betriebsgrößen Informationen über den Zustand einzelner Komponenten der Bypass-Schaltung 20. Die Hauptstrombahn 12, 14, 16, an die die Bypass-Schaltung 20 angeschlossen ist, ist mit einem Messmittel 27 versehen, das als Messwandler 28 ausgebildet ist. Über den Messwandler 28 wird ein Stromfluss in der Hauptstrombahn 12, 14, 16 erfasst und das entsprechende Messsignal an eine Verarbeitungseinheit 43 der Steuereinheit 40 gesendet. Über den Messwandler 28 ist erfassbar, ob eine Deaktivierung eines Elektromotors 18, der über die Hauptstrombahn 12, 14, 16 mit Strom versorgt wird, erfolgreich durchgeführt ist.

Die Verarbeitungseinheit 43 weist auch Messmittel 27 auf, mit denen eine Sperrspannung 53 an der Bypass-Schaltung 20 erfassbar ist. Die Sperrspannung 53 erreicht im geöffneten Zustand des elektromechanischen Schalters 26 und des Halbleiterschalter 22 ein Maximum. Im geschlossenen Zustand der Bypass-Schaltung 20 beträgt die gemessene Sperrspannung 53 im Wesentlichen Null. Auch über die Sperrspannung 53 ist somit der Zustand der Bypass-Schaltung 20 erfassbar. Des Weiteren werden über Messsignaleingänge 41 jeweils die an den Halbleiterschalter 22 gesendeten Zündbefehle 21 und die an den elektromechanischen Schalter 26 gesendeten Betätigungsbefehle 25 an die Verarbeitungseinheit 43 gemeldet. Des Weiteren ist über einen Messsignaleingang 41 eine Spulenspannung 51 der Spule 49 erfassbar. Die Steuereinheit 40 ist dazu geeignet, die über die Messsignaleingänge 41 gemeldeten Informationen dahingehend auszuwerten, welcher Zustand in der Bypass-Schaltung 20 vorliegt. Durch die Kombination einer Mehrheit von Informationen unterschiedlicher Messsignaleingänge 41 liegt eine redundante Erfassung vor, so dass stets eine sichere Betätigung der Bypass-Schaltung möglich ist.

Der in der Steuereinheit 40 aufgrund der über die Messsignaleingänge 41 gelieferten Betriebsgrößen ermittelte Zustand wird an eine Rückmeldeeinheit 50 gemeldet, die zwei Strombahnen 57 umfasst. Von der Rückmeldeeinheit 50 wird ein Rückmeldesignal 56 ausgegeben, das dem vorliegenden Zustand der Bypass-Schaltung 20 entspricht. Mittels einer der Strombahnen 57 in der Rückmeldeeinheit 50 wird ein Spiegelsignal 58 erzeugt, das bestimmungsgemäß mit dem Rückmeldesignal 56 korrespondiert. Das Spiegelsignal 58 wird an die Verarbeitungseinheit 43 zurückgespeist. Hierdurch wird von der Steuereinheit 40 das nach außen an ein Sicherheitsschaltgerät 30 gesendete Rückmeldesignal 56 überprüft. Die Verarbeitungseinheit 43 erhält auch über den Sicherheitssignaleingang 42 das Sicherheitssignal 52 und über den Steuersignaleingang 54 ein Betriebssteuersignal 54 von einem Betriebssteuermittel 46. Das Betriebssteuermittel 46 wiederum wirkt zur Übermittlung des Betriebssteuersignals 54 mit dem Sicherheitsschaltgerät 30 zusammen. Das Sicherheitsschaltgerät 30 wiederum ist mit einem elektromechanischen Schaltgerät 32 gekoppelt, das über Schaltbefehle 55 in einen geöffneten und geschlossenen Zustand gebracht werden kann.

## Patentansprüche

1. Sanftstarter (10) zum Schalten mindestens einer in einer Hauptstrombahn (12, 14, 16) angeordneten Bypass-Schaltung (20) mit einem zu einem elektromagnetischen Schalter (26) parallel geschalteten Halbleiterschalter (22), wobei der Sanftstarter (10) eine Steuereinheit (40) zur Betätigung der Bypass-Schaltung (20) aufweist und die Steuereinheit (40) einen Steuersignaleingang (44) zum Empfang von Betriebssteuersignalen (54) aufweist,
**dadurch gekennzeichnet, dass** die Steuereinheit (40) einen separaten Sicherheitssignaleingang (42) zum Empfang von Sicherheitssignalen (52) aufweist, dass die Steuereinheit (40) zu einer Prüfung eines Sicherheitssignals (52) vom Sicherheitssignaleingang (42) und eines Betriebssteuersignals (54) vom Steuersignaleingang (44) ausgebildet ist, um den Inhalt des Sicherheitssignals (52) bzw. des Betriebssteuersignals (54) zu erkennen, und dass die Steuereinheit ausgebildet ist, einen Deaktivierungsbefehl an die Bypass-Schaltung (20) auszugeben, wenn das Sicherheitssignal (52) und/oder das Betriebssteuersignal (52) einen Betriebsstopp befiehlt.

2. Sanftstarter (10) nach Anspruch 1,
**dadurch gekennzeichnet, dass** die Steuereinheit (40) je Hauptstrombahn (12, 14, 16) mindestens einen Messsignaleingang (41) aufweist, der zur Kopplung mit je einem Messmittel (27) zur Erfassung mindestens einer Betriebsgröße der Bypass-Schaltung (20) ausgebildet ist.

3. Sanftstarter (10) nach einem der Ansprüche 1 oder 2, **dadurch gekennzeichnet, dass** die Steuereinheit (40) mit einer Rückmeldeeinheit (50) verbunden ist, die zur Ausgabe eines Rückmeldesignals (56) ausgebildet ist, das mit einem vorliegenden Schaltzustand der Bypass-Schaltung (20) korrespondiert.

4. Sanftstarter (10) nach Anspruch 3,
**dadurch gekennzeichnet, dass** die Rückmeldeeinheit (50) ein Relais mit zwangsgekoppelten Schaltkontakten umfasst, das an zwei Strombahnen (57) angeschlossen ist, wobei mindestens eine der Strombahnen (57) zur Übertragung eines mit dem Rückmeldesignal (56) korrespondierenden Spiegelsignals (58) an die Steuereinheit (40) mit der Steuereinheit (40) elektrisch verbunden ist, so dass der nach außen gemeldete Zustand der mindestens einen Bypass-Schaltung (20) durch die Steuereinheit (40) überwachbar ist.

5. Sanftstarter (10) nach einem der Ansprüche 1 bis 4, **dadurch gekennzeichnet, dass** in der mindestens einen Hauptstrombahn (12, 14, 16) ein Zusatz-Halbleiterschalter (23) in Reihe mit der jeweiligen Bypass-Schaltung (20) angeordnet ist, oder in der mindestens einen Strombahn ein zusätzlicher elektromechanischer Schalter in Reihe mit der jeweiligen Bypass-Schaltung (20) angeordnet ist.

6. Sanftstarter (10) nach einem der Ansprüche 1 bis 5, **dadurch gekennzeichnet, dass** die Steuereinheit (40) mit einem Auswerteschaltgerät verbunden ist.

7. Betriebsverfahren (100) für einen Elektromotor (18) mittels eines Sanftstarters (10), der eine Steuereinheit (40) zum Betätigen einer in einer Hauptstrombahn (12, 14, 16) angeordneten Bypass-Schaltung (20) mit einem zu einem elektromagnetischen Schalter (26) parallel geschalteten Halbleiterschalter (22) aufweist, umfassend die Schritte:
a) Dauerbetrieb des Elektromotors (18);
b) Empfangen eines Betriebssteuersignals (54) über einen Steuersignaleingang (44) der Steuereinheit (40); **gekennzeichnet dadurch, dass** das Verfahren die folgenden Schritte umfasst:
c) Empfangen eines Sicherheitssignals (52) über einen separaten Sicherheitssignaleingang (42) der Steuereinheit (40);
d) Prüfen des Betriebssteuersignals (54) und des Sicherheitssignals (52), um den Inhalt des Sicherheitssignals (52) bzw. des Betriebssteuersignals (54) zu erkennen;
e) Ausgeben eines Deaktivierungsbefehls an die Bypass-Schaltung (20), wenn im Schritt d) erkannt wird, dass das Sicherheitssignal (52) und/oder das Betriebssteuersignal (52) einen Betriebsstopp befiehlt.

8. Betriebsverfahren (100) nach Anspruch 7,
**dadurch gekennzeichnet, dass** in einem weiteren Schritt f) ein Aktivierungsbefehl an die Bypass-Schaltung (20) ausgegeben wird, wenn als Sicherheitssignal (52) ein Einschaltbefehl empfangen wird und ein Übergang (73) des Betriebssteuersignals (54) von einem Ausschaltbefehl auf einen Einschaltbefehl erfasst wird.

9. Betriebsverfahren (100) nach einem der Ansprüche 7 oder 8,
**dadurch gekennzeichnet, dass** ein Sicherheitssignal (52) und/oder ein Betriebssteuersignal (54) mit mindestens einer Betriebsgröße der Bypass-Schaltung (20) abgeglichen wird, und ein Deaktivierungsbefehl ausgegeben wird, wenn eine Diskrepanz zwischen der mindestens einen Betriebsgröße und dem Sicherheitssignal (52) und/oder dem Betriebssteuersignal (54) erkannt wird.

10. Betriebsverfahren (100) nach Anspruch 9,
**dadurch gekennzeichnet, dass** aus der mindestens einen Betriebsgröße der Bypass-Schaltung (20) in einer Rückmeldeeinheit (50) ein Rückmeldesignal (56) ermittelt wird.

11. Betriebsverfahren (100) nach Anspruch 10,
**dadurch gekennzeichnet, dass** durch die Rückmeldeeinheit (50) ein mit dem Rückmeldesignal (56) korrespondierendes Spiegelsignal (58) erzeugt wird, das an die Steuereinheit (40) ausgegeben wird, so dass der nach außen gemeldete Zustand der mindestens einen Bypass-Schaltung (20) durch die Steuereinheit (40) überwachbar ist.

12. Schaltsystem (70) zum Schalten mindestens einer Hauptstrombahn (12, 14, 16), die mit einem Elektromotor (18) verbunden ist, das Schaltsystem (70) umfassend ein Sicherheitsschaltgerät (30), ein elektromechanisches Schaltgerät (32) und einen Sanftstarter (10) nach einem der Ansprüche 1 bis 6.

13. Schaltsystem (70) nach Anspruch 12,
**dadurch gekennzeichnet, dass** ein Befehlsausgang (34, 36) des Sicherheitsschaltgeräts (30) mit einem Betriebssteuermittel (46) und einem Sicherheitssignaleingang (42) der Steuereinheit (40) des Sanftstarters (10) verbunden ist.

14. Programm (80) zur Speicherung und Durchführung in einer Steuereinheit (40) mit einem Speicher (82) und einem Rechenwerk (84),
wobei das Programm (80) dazu ausgebildet ist, mindestens eines der Betriebsverfahren (100) nach einem der Ansprüche 7 bis 11 in einem Sanftstarter (10) nach einem der Ansprüche 1-6 durchzuführen.

## Claims

1. Soft starter (10) for connecting at least one bypass circuit (20) that is arranged in a main circuit (12, 14, 16) and has a semiconductor switch (22) that is connected in parallel with an electromagnetic switch (26), wherein the soft starter (10) comprises a control unit (40) for actuating the bypass circuit (20) and the control unit (40) comprises a control signal input (44) for receiving operation control signals (54),
**characterised in that** the control unit (40) comprises a separate safety-signal input (42) for receiving safety signals (52), that the control unit (40) is embodied to check a safety signal (52) from the safety-signal input (42) and an operation control signal (54) from the control signal input (44), in order to detect the content of the safety signal (52) and the operation control signal (54), and that the control unit is embodied to output a deactivation command to the bypass circuit (20) when the safety signal (52) and/or the operation control signal (54) commands an operation stop.

2. Soft starter (10) according to claim 1,
**characterised in that** the control unit (40) comprises at least one measuring signal input (41) for each main circuit (12, 14, 16), said measuring signal input (41) being embodied to be coupled in each case to one measuring instrument (27) for detecting at least one operating variable of the bypass circuit (20).

3. Soft starter (10) according to one of claims 1 or 2, **characterised in that** the control unit (40) is connected to a feedback unit (50), which is embodied to output a feedback signal (56), which corresponds to an existing switching state of the bypass circuit (20).

4. Soft starter (10) according to claim 3,
**characterised in that** the feedback unit (50) includes a relay with positively coupled switching contacts, which is connected to two circuits (57), wherein at least one of the circuits (57), to transmit a mirror signal (58) that corresponds with the feedback signal (56) to the control unit (40), is electrically connected to the control unit (40), so that the state of the at least one bypass circuit (20) that is signalled externally can be monitored by the control unit (40) .

5. Soft starter (10) according to one of claims 1 to 4, **characterised in that**, in the at least one main circuit (12, 14, 16), a supplementary semiconductor switch (23) is arranged in series with the respective bypass circuit (20) or, in the at least one circuit, a supplementary electromechanical switch (29) is arranged in series with the respective bypass circuit (20) .

6. Soft starter (10) according to one of claims 1 to 5, **characterised in that** the control unit (40) is connected to an evaluation switching device.

7. Operating method (100) for an electric motor (18) by means of a soft starter (10), which comprises a control unit (40) for actuating a bypass circuit (20) that is arranged in a main circuit (12, 14, 16) and has a semiconductor switch (22) that is connected in parallel with an electromagnetic switch (26), with the steps:
a) continuous operation of the electric motor (18);
b) reception of an operation control signal (54) via a control signal input (44) of the control unit (40);
**characterised in that** the method comprises the following steps:
c) reception of a safety signal (52) via a separate safety input (42) of the control unit (40);
d) checking the operation control signal (54) and the safety signal (52), in order to detect the content of the safety signal (52) or the operation control signal (54);
e) issuing a deactivation command to the bypass circuit (20), if it is detected in step d) that the safety signal (52) and/or the operation control signal (52) commands an operation stop.

8. Operating method (100) according to claim 7,
**characterised in that** in a further step f) an activation command is issued to the bypass circuit (20) if a switch-on command is received as a safety signal (52) and a transition (73) of the operation control signal (54) from a switch-off command to a switch-on command is detected.

9. Operating method (100) according to one of claims 7 or 8, **characterised in that** a safety signal (52) and/or an operation control signal (54) is compared with at least one operating variable of the bypass circuit (20) and a deactivation command is issued if a discrepancy is detected between the at least one operating variable and the safety signal (52) and/or the operation control signal (54).

10. Operating method (100) according to claim 9, **characterised in that** a feedback signal (56) is ascertained from the at least one operating variable of the bypass circuit (20) in a feedback unit (50).

11. Operating method (100) according to claim 10, **characterised in that** a mirror signal (58) corresponding to the feedback signal (56) is generated by the feedback unit (50) and issued to the control unit (40), so that the state of the at least one bypass circuit (20) that is signalled externally can be monitored by the control unit (40).

12. Switching system (70) for connecting at least one main circuit (12, 14, 16), which is connected to an electric motor (18), said switching system (70) including a safety switching device (30), an electromechanical switching device (32) and a soft starter (10) according to one of claims 1 to 6.

13. Switching system (70) according to claim 12, **characterised in that** a command output (34, 36) of the safety switching device (30) is connected to an operation control instrument (46) and a safety-signal input (42) of the control unit (40) of the soft starter (10).

14. Program (80) to be stored and executed in a control unit (40) with a memory (82) and a computing unit (84),
wherein the program (80) is embodied to carry out at least one of the operating methods (100) according to one of claims 7 to 11 in a soft starter (10) according to one of claims 1-6.

## Revendications

1. Démarreur progressif (10) permettant le couplage d'au moins un circuit de dérivation (20) disposé dans un trajet de courant principal (12, 14, 16), comprenant un interrupteur à semi-conducteurs (22) couplé en parallèle avec un interrupteur électromagnétique (26), dans lequel le démarreur progressif (10) comprend une unité de commande (40) pour actionner le circuit de dérivation (20) et l'unité de commande (40) comprend une entrée de signaux de commande (44) pour recevoir des signaux de commande de fonctionnement (54),
**caractérisé en ce que** :
l'unité de commande (40) comprend une entrée de signaux de sécurité (42) distincte pour recevoir des signaux de sécurité (52),
l'unité de commande (40) est configurée pour examiner un signal de sécurité (52) à partir de l'entrée de signaux de sécurité (42) et un signal de commande de fonctionnement (54) à partir de l'entrée de signaux de commande (44), afin d'identifier le contenu du signal de sécurité (52) ou du signal de commande de fonctionnement (54), et
l'unité de commande est configurée pour délivrer un ordre de désactivation au circuit de dérivation (20) lorsque le signal de sécurité (52) et/ou le signal de commande de fonctionnement (52) ordonne un arrêt de fonctionnement.

2. Démarreur progressif (10) selon la revendication 1, **caractérisé en ce que** l'unité de commande (40) comprend au moins une entrée de signal de mesure (41) par trajet de courant principal (12, 14, 16), qui est configurée pour être couplée avec un organe de mesure (27) respectif pour détecter au moins une grandeur de fonctionnement du circuit de dérivation (20).

3. Démarreur progressif (10) selon l'une des revendications 1 ou 2,
**caractérisé en ce que** l'unité de commande (40) est reliée à une unité de rétroaction (50), qui est configurée pour délivrer un signal de rétroaction (56), qui correspond à un état de commutation présent du circuit de dérivation (20).

4. Démarreur progressif (10) selon la revendication 3, **caractérisé en ce que** l'unité de rétroaction (50) comprend un relais pourvu de contacts de commutation couplés en force, qui est connecté à deux trajets de courant (57), dans lequel au moins l'un des trajets de courant (57) est connecté électriquement à l'unité de commande (40) pour transmettre un signal miroir (58) correspondant au signal de rétroaction (56) à l'unité de commande (40), de telle sorte que l'état signalé vers l'extérieur de l'au moins un circuit de dérivation (20) peut être surveillé par l'unité de commande (40).

5. Démarreur progressif (10) selon l'une des revendications 1 à 4,
**caractérisé en ce qu'**un interrupteur à semi-conducteurs supplémentaire (23) est monté en série avec le circuit de dérivation (20) respectif dans l'au moins un trajet de courant principal (12, 14, 16), ou **en ce qu'**un interrupteur électromécanique supplémentaire est monté en série avec le circuit de dérivation respectif (20) dans l'au moins un trajet de courant.

6. Démarreur progressif (10) selon l'une des revendications 1 à 5,
**caractérisé en ce que** l'unité de commande (40) est reliée à un dispositif de commutation d'analyse.

7. Procédé de fonctionnement (100) d'un moteur électrique (18) au moyen d'un démarreur progressif (10), qui comprend une unité de commande (40) pour actionner un circuit de dérivation (20) disposé dans un trajet de courant principal (12, 14, 16), comprenant un interrupteur à semi-conducteurs (22) couplé en parallèle avec un interrupteur électromagnétique (26), le procédé comprenant les étapes suivantes :
a) fonctionnement continu du moteur électrique (18),
b) réception d'un signal de commande de fonctionnement (54) par une entrée de signaux de commande (44) de l'unité de commande (40),
**caractérisé en ce que** le procédé comprend les étapes suivantes :
c) réception d'un signal de sécurité (52) par une entrée de signaux de sécurité (42) distincte de l'unité de commande (40),
d) examen du signal de commande de fonctionnement (54) et du signal de sécurité (52), pour identifier le contenu du signal de sécurité (52) ou du signal de commande de fonctionnement (54),
e) délivrance d'un ordre de désactivation au circuit de dérivation (20), lorsqu'il est détecté à l'étape d) que le signal de sécurité (52) et/ou le signal de commande de fonctionnement (52) ordonne un arrêt de fonctionnement.

8. Procédé de fonctionnement (100) selon la revendication 7, **caractérisé en ce que**, dans une étape supplémentaire f), un ordre d'activation est délivré au circuit de dérivation (20) lorsqu'un ordre de marche est reçu en tant que signal de sécurité (52) et une transformation (73) du signal de commande de fonctionnement (54) d'un ordre d'arrêt en un ordre de marche est détectée.

9. Procédé de fonctionnement (100) selon l'une des revendications 7 ou 8,
**caractérisé en ce qu'**un signal de sécurité (52) et/ou un signal de commande de fonctionnement (54) est comparé avec au moins une grandeur de fonctionnement du circuit de dérivation (20) et un signal de désactivation est émis lorsqu'une divergence est identifiée entre l'au moins une grandeur de fonctionnement et le signal de sécurité (52) et/ou le signal de commande de fonctionnement (54).

10. Procédé de fonctionnement (100) selon la revendication 9, **caractérisé en ce qu'**un signal de rétroaction (56) est déterminé à partir de l'au moins une grandeur de fonctionnement du circuit de dérivation (20) dans une unité de rétroaction (50).

11. Procédé de fonctionnement (100) selon la revendication 10, **caractérisé en ce qu'**un signal miroir (58) correspondant au signal de rétroaction (56) est généré par l'unité de rétroaction (50), qui est transmis à l'unité de commande (40), de telle manière que l'état signalé vers l'extérieur de l'au moins un circuit de dérivation (20) peut être surveillé par l'unité de commande (40).

12. Système de commutation (70) pour coupler au moins un trajet de courant principal (12, 14, 16), qui est relié à un moteur électrique (18), le système de commutation (70) comprenant un commutateur de sécurité (30), un commutateur électromécanique (32) et un démarreur progressif (10) selon l'une des revendications 1 à 6.

13. Système de commutation (70) selon la revendication 12, **caractérisé en ce qu'**une sortie de commande (34, 36) du commutateur de sécurité (30) est reliée à un organe de commande de fonctionnement (46) et à une entrée de signal de sécurité (42) de l'unité de commande (40) du démarreur progressif (10).

14. Programme (80) de stockage et d'exécution dans une unité de commande (40) comprenant une mémoire (82) et une unité de calcul (84), dans lequel le programme est configuré pour exécuter au moins l'un des procédés de fonctionnement (100) selon l'une des revendications 7 à 11 dans un démarreur progressif (10) selon l'une des revendications 1 à 6.
